# EUROPEAN PATENT SPECIFICATION

(11) **EP 0 890 458 B1**
(45) Date of publication and mention of the grant of the patent: **03.09.2003**
(21) Application number: 98305479.2
(22) Date of filing: 09.07.1998
(51) Int. Cl.: B60C 11/24, B60C 19/00

(54) **Wear condition detecting apparatus for tyre and method thereof**
Verschleisszustandserfassungsvorrichtung für Reifen und Verfahren
Appareil de détection du niveau d'usure d'un pneu et procédé

(30) Priority: 10.07.1997 JP 18555297; 09.06.1998 JP 16078198
(43) Date of publication of application: 13.01.1999
(73) Proprietor: Sumitomo Rubber Industries Ltd., Kobe-shi, Hyogo-ken (JP); SUMITOMO ELECTRIC INDUSTRIES, LTD., Osaka-shi, Osaka-fu (JP)
(72) Inventor: Yanase, Minao, Kobe-shi, Hyogo-ken (JP)
(74) Representative: Stewart, Charles Geoffrey

(56) References cited:
- EP-A- 0 656 268
- DE-A- 19 619 393
- PATENT ABSTRACTS OF JAPAN vol. 1995, no. 02, 31 March 1995 (1995-03-31) -& JP 06 313749 A (OMRON CORP), 8 November 1994 (1994-11-08)
- PATENT ABSTRACTS OF JAPAN vol. 006, no. 265 (P-165), 24 December 1982 (1982-12-24) -& JP 57 161621 A (NISSAN JIDOSHA KK), 5 October 1982 (1982-10-05)
- PATENT ABSTRACTS OF JAPAN vol. 1995, no. 09, 31 October 1995 (1995-10-31) -& JP 07 164830 A (MATSUSHITA ELECTRIC IND CO LTD), 27 June 1995 (1995-06-27)
- PATENT ABSTRACTS OF JAPAN vol. 007, no. 199 (M-240), 3 September 1983 (1983-09-03) & JP 58 097507 A (NAIRUSU BUHIN KK), 10 June 1983 (1983-06-10)

## Description

The present invention relates to a wear condition detecting apparatus for a tyre and a method thereof. More particularly, the present invention relates to a wear condition detecting apparatus for a tyre and a method thereof which can improve performance and safety of a vehicle by detecting the wear condition of a tyre based on rotational information of the tyre.

From DE-A-196 19 393 it is known a system for detecting the wear condition of a tyre which discloses the features of the preamble of the claims.

Since a tyre is provided with longitudinal and transverse grooves for the sake of draining characteristics, there are formed rubber blocks that are enclosed by these grooves. A block of large size is hardly deformed by shear forces in front, rear and lateral directions and presents high rigidity. A tyre having a tread pattern consisting of such large sized blocks is generally called a tyre of a high pattern rigidity.

The degree of pattern rigidity largely influences the slip rate as well as cornering power or cornering force. Therefore, for estimating movements of a vehicle based on rotational information of a tyre in a device for improving the performance or safety of the vehicle based on rotational information such as an ABS (anti-lock braking system), TCS (traction controller system), NAVI (navigation system) or a tyre air-pressure loss alarm device, it is necessary to know the pattern rigidity of a tyre. Further, wear of a tyre results in a smaller thickness of tread rubber of the tyre, whereby the rigidity in the front and rear directions becomes larger. Wear of a tyre also affects the performance of the vehicle on snow in the case of a winter tyre, and affects the hydro-planing performance of the vehicles in the case of a summer tyre. Therefore, while detection of wear would be useful, the above devices are not provided with a function for detecting wear. Wear of a tyre can only be discriminated by either employing depth gauges for measuring groove depths or by confirming by eyesight an indicator which is provided on a tyre to indicate the wear limit. Such confirmation by eyesight requires skill, whereby maintenance of a tyre might be appear to be troublesome, and there also exists a danger in that wear of a tyre is overlooked at the time of checking when performing maintenance.

The present invention has been made in view of these facts, and it is an object thereof to provide a wear condition detecting apparatus for a tyre and a method thereof which regularly measures wear conditions of a tyre and with which the performance and safety of a vehicle can be improved.

In accordance with the present invention, there is provided a wear condition detecting apparatus for a tyre comprising:
(a) a rotational speed detecting means for regularly detecting rotational speeds of tyres of four wheels of a vehicle;
(b) a calculating means for calculating a ratio of a rotational speed of a front wheel to a rotational speed of a rear wheel based on a measured value obtained by the rotational speed detecting means, and for obtaining a relational formula between the rotational speed ratio and acceleration of the vehicle, and
(c) a comparing means for comparing a slope of the relational formula obtained by the calculating means with a preliminarily known slop of a relational formula between a rotational speed ratio of a tyre and an acceleration of the vehicle.

In accordance with the present invention, there is further provided a wear condition detecting method for a tyre comprising the steps of:
(a) regularly measuring rotational speeds of tyres of four wheels presently attached to a vehicle,
(b) calculating a ratio of a rotational speed of a front wheel to a rotational speed of a rear wheel based on the measured rotational speed,
(c) obtaining a relational formula between the rotational speed ratio and an acceleration of the vehicle, and
(d) comparing a slop of the relational formula with a preliminarily known slope of a relational formula of a rotational speed ratio of a tyre and acceleration of the vehicle to determine a wear c condition of a tyre.

The wear condition detecting apparatus for a tyre and method thereof according to the present invention will now be explained based on the accompanying drawings:
Figure 1 is a diagram showing an arrangement of a wear condition detecting apparatus for a tyre according to the present invention.
Figure 2 is a block diagram showing a block diagram arrangement of the wear condition detecting apparatus for a tyre of Figure 1;
Figure 3 shows a regression line between a front and rear wheel ratio and acceleration for a summer tyre and a winter tyre.
Figure 4 is a µ-s characteristic curve of the summer tyre of Figure 3;
Figure 5 is a µ-s characteristic curve of the winter tyre of Figure 3;
Figure 6 is a flowchart of the present invention;
Figure 7 is a diagram showing a relationship between acceleration and slip rate of a new tyre; and
Figure 8 is a diagram showing a relationship between acceleration and slip rate of a worn tyre.

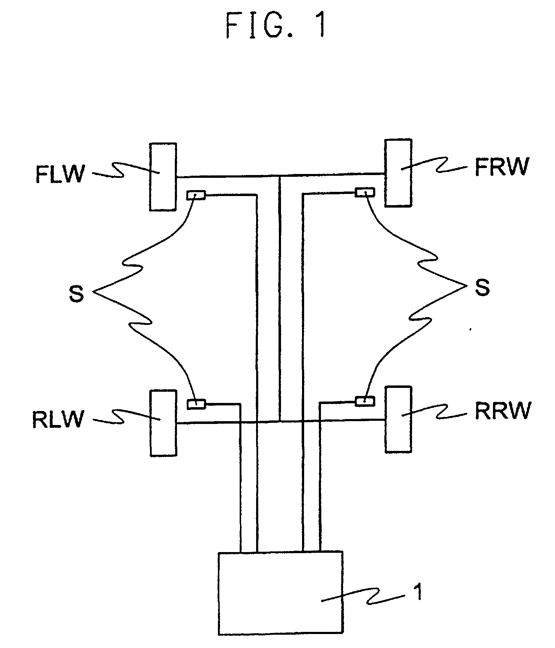

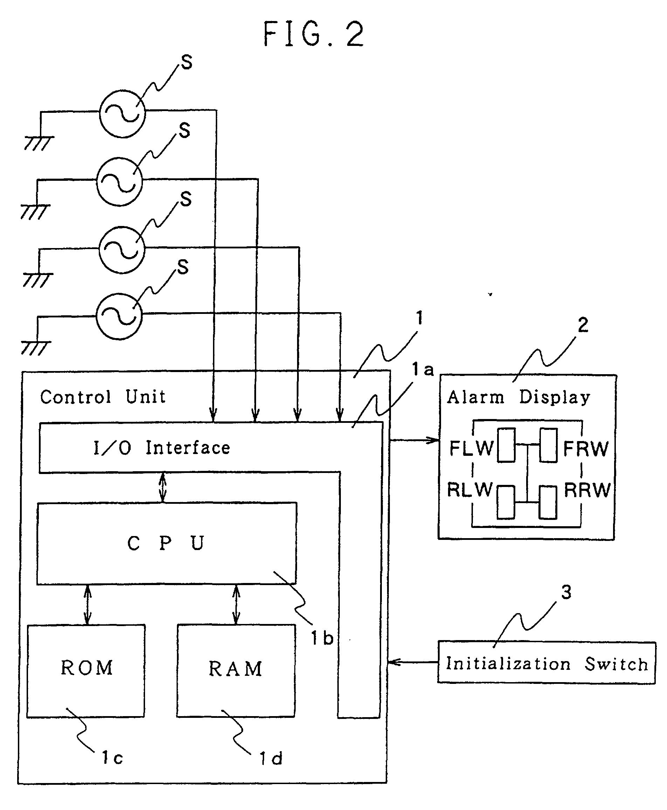

As shown in Figure 1, the wear condition detecting apparatus comprises a rotational speed detecting means S for detecting the rotational speed of a tyre and wheel. Such a means is provided for each wheel of a four-wheeled vehicle FLW, FRW, RLW and RRW, respectively, and the outputs of the rotational speed detecting means S is transmitted to a control unit 1 which is, for instance, and ABS unit. The rotational speed detecting means S might be a wheel speed sensor which employs an electromagnetic pickup for generating a rotational pulse wherein the rotational speed is measured based on a number of pulses, or it might alternatively be an angular speed sensor such as a dynamo in which electricity is generated by utilising rotation and the rotational speed is measured based on the voltage thereof. As shown in Figure 2, there is connected to the control unit 1 an alarm display device 2 comprising liquid crystal display elements, plasma display elements, CRT, lamp or sounder for informing of a tyre the air pressure of which has dropped. There is also connected an initialising switch 3 which can be operated by a driver or the like.

The control unit 1 comprises a calculating means for calculating a ratio of the rotational speed of the front tyres FLW, FRW to the rotational speed of the rear tyres RLW, RRW (front and rear wheel ratio) based on the measurement value obtained by the rotational speed detecting means S, and for obtaining a relational formula between the front and rear wheel ratio and acceleration of the vehicle; and a comparing means for comparing the slope (gradient) of the relational formula obtained by the calculating means with a preliminarily known slop (gradient) of the relational formula between a front and rear wheel ratio and the acceleration of the vehicle. The control unit 1 is composed of an I/O interface la required for send/receiving signals to/from an external device, a CPU 1b which functions as a centre for performing calculation processes, a ROM lc in which a control operation program for the CPU 1b is stored, and RAM ld to which data are temporarily written when the CPU 1b performs control operations or from which these written data are read out.

According to the present embodiment, when the comparing means has judged that a tyre is in a worn condition, an alarm is generated by the alarm display device 2. The preliminarily known tyre might be, for instance, a new tyre or a tyre worn by 50% (intermediate-range wear) either of which can be set as the reference tyre before generating an alarm.

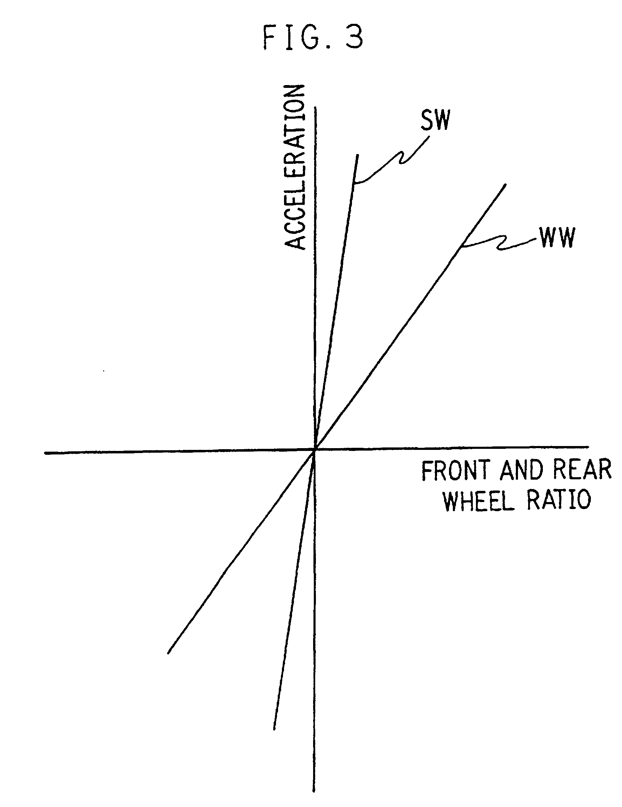

Figure 3 is a diagram in which the relational formula between the front and rear wheel ratio and the acceleration of the vehicle has been regressed as a linear function when a new summer tyre SW and a new winter tyre TW have performed straight-forward running on a flat ground surface at a velocity of 50 km/h as shown in Tables 1 and 2. It should be noted that the acceleration and the front and read wheel ratio are obtained by the following equations (1) and (2), provided that the wheel speed data of each of the wheel tyres FLW, FRW, RLW and RRW at a specified point of time obtained from a sensor in, for example, ABS are expressed as F1ₙ, F2ₙ, F3ₙ, and F4ₙ, and the preceding wheel speed data as F1ₙ₋₁, F2ₙ₋₁, F3ₙ₋₁, F4ₙ₋₁, respectively. Δt denotes a time interval of data F1ₙ to F4ₙ and F1ₙ₋₁ to F4ₙ₋₁.$\text{Acceleration =} \frac{{\text{(F1}}_{\text{n}} {\text{+ F2}}_{\text{n}} {\text{+ F3}}_{\text{n}} {\text{+ F4}}_{\text{n}} {\text{) - (F1}}_{\text{n-1}} {\text{+ F2}}_{\text{n-1}} {\text{+ F3}}_{\text{n-1}} {\text{+ F4}}_{\text{n-1}} \text{)}}{\text{Δt}}$$\text{Front and Rear Wheel Ratio =} \frac{{\text{(F1}}_{\text{n}} {\text{+ F2}}_{\text{n}} \text{)}}{{\text{(F3}}_{\text{n}} {\text{+ F4}}_{\text{n}} \text{)}}$

**Table 1**

| | New Summer Tyre | Summer Tyre Worn by 50% (Intermediate-Range Wear) |
|---|---|---|
| Tyre size | 205/65R15 SP65I | |
| Speed (km/h) | 50 | |
| Load (kg) | 450 | |
| Ground Surface | Dry Asphalt | |

**Table 2**

| | New Winter Tyre | Winter Tyre Worn by 50% (Intermediate-Range Wear) |
|---|---|---|
| Tyre size | 205/65R15 HS-1(Stud-less) | |
| Speed (km/h) | 50 | |
| Load (kg) | 450 | |
| Ground Surface | Dry Asphalt | |

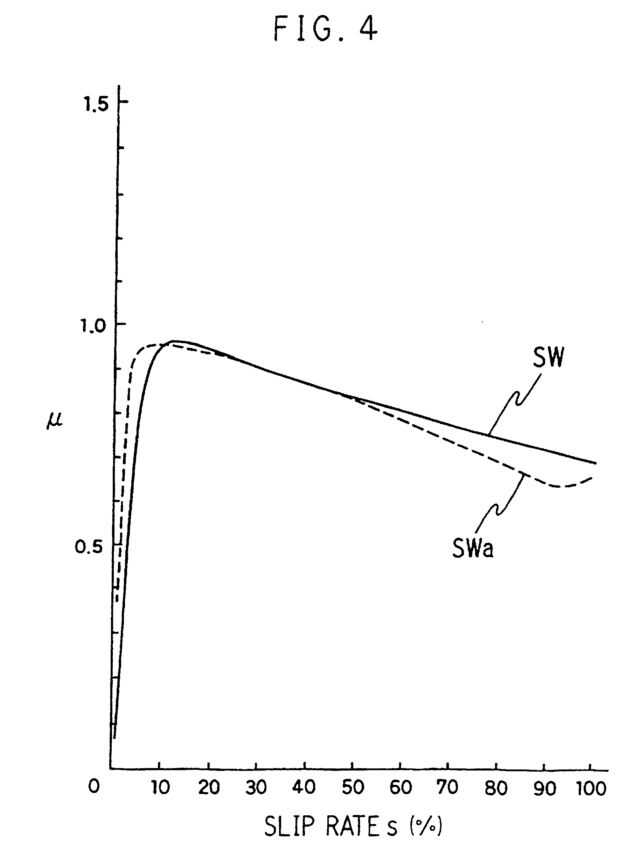

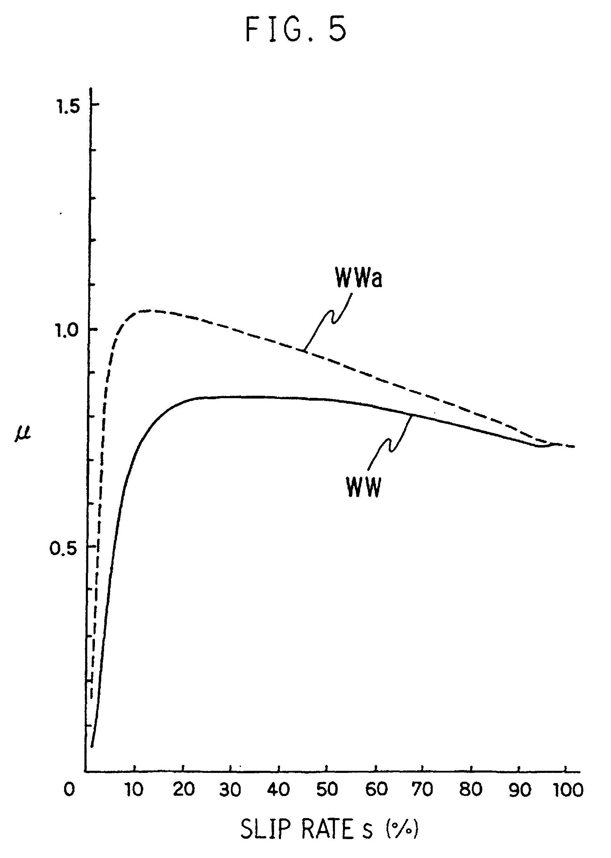

At this point, the acceleration represents a driving force required for acceleration by bring multiplied by the mass of the vehicle, and the front and rear wheel ratio represents a slip rate s by subtracting from this value a front and rear wheel ratio at the time of neutral running (which is approximately close to 1) and the relationship between these represents, so to speak, a µ-s characteristic of the tyre as shown in Figures 4 and 5. Therefore, its slope represents the rigidity of a tyre in front and rear directions.

That is, out of the µ-s characteristic of the tyre, the area in which the slip rate s is small (not more than 10%) slip hardly occurs between the tyre and the ground surface, the tread rubber of the tyre is deformed by shearing in front and rear directions, and force is generated in front and rear directions. This deformation by shearing is made to be the apparent slip, and the shear strength generated by the deformation by shearing is made to be the driving force or damping force, which force by being divided by load, becomes µ (damping-driving force coefficient).

The slope of the µ-s characteristic curve in an area in which the slip rate s is small is determined by the rigidity of tread rubber in front and rear directions. When the pattern block of the tread is large or the rubber is hard, the rigidity of the tread rubber blocks becomes high and the slope of the µ-s characteristic curve becomes large (a rising direction), and vice versa, the slope becomes small. For instance, a stud-less tyre comprises, due to its characteristics, many sipes in the pattern (i.e. the pattern block is small) and the rubber thereof is soft, the slope of the µ-s characteristic curve is smaller compared to a summer tyre. When the tyre is worn, the gauge of the tread rubber becomes thin whereby the rigidity of tread rubber in the front and rear direction becomes larger compared to those of new tyres SW, WW as shown by arrow SWa in Figure 3 and arrow WWa in Figure 5, and thus, the slope becomes even larger.

In the area in which the slip rate s of a tyre attached to a vehicle at the time of running (e.g. a speed ratio of front and rear wheels of a 2WD) is not more than 10%, no slip is generated between the tyre and the road surface, and measuring an acceleration corresponds to measurement of driving force or control force due to deformation of tread rubber, and this force divided by load is µ. In the present embodiment, based on this fact, it has been taken notice of the fact that the slope of the µ-s characteristic curve in which the slip rate s is in the range of not more than 10% becomes large when the rigidity of the tread in the front and radar direction is large, and the slope becomes small when the rigidity thereof is small. In the case where the tyre has not been changed, the slope of the µ-s characteristic curve measured after a specified period (the slope in which the slip rate is not more than 10%) is larger compared to the previously measured slope and so this slope can be utilised for determining whether wear has occurred. For instance, based on the relational formula between the front and read wheel ratio and the acceleration of the vehicle or based on the slop of the µ-s characteristic curve, if ma/m = k (threshold) is not leas than 1.5, and preferably not less than 2.0m (wherein m represents the slope of a new tyre and ma the slope of a worn tyre), it is determined that this tyre is worn and an alarm is generated.

It should be noted that the wheel speed data are sampled at specified sampling periods and collected until a regression line of favourable accuracy (a relational formula between the front and rear wheel ratio and acceleration) can be obtained. This collection of data is regularly and automatically performed such as every 6 months or 1 year, or every time a distance of 5,000 km or 10,000 km has been recorded, and variations in the obtained slope are evaluated.

When the slope has come into a region in which the tyre is estimated to be worn, an alarm is generated. In the case of, for instance, a stud-less tyre, an intermediate alarm might also be generated at an intermediate stage ( a degree at which the platform can be seen) since the difference between the slope of a new tyre and the slope of a completely worn tyre is large. Also, since the rigidity of the tyre in front and rear direction for determining the initial slope of the µ-s characteristic of the tyre does not largely differ between a summer tyre and a winter tyre in the final state of wear, it is preferable that a range of slope in the final term of wear is preliminarily obtained for each vehicle type.

It should be noted that since initialisation is generally performed when the tyre is now or at the time of exchanging a tyre, an alarm might be generated by watching variations in slope from this point in these cases. In order to generate an alarm at an intermediate state of wear of a winter tyre, it is required to determine that this tyre is actually a winter tyre, determination of a winter tyre is performed at the time of initialisation, and an alarm in the intermediate term of wear is generated by performing regular checks.

The present invention will now be explained based on an example thereof, but the present invention is not limited to only this example.

### Example

An example for detecting a wear condition of a tyre in the case of a FR vehicle will now be explained based on a tyre have a tyre size of 245/60R16.

An apparatus in which puncture is detected by relative comparison of wheel speed is equipped with a device for regularly detecting wheel speed, and since such an apparatus is required to perform initialisation at the time of exchanging a tyre, such an apparatus will be taken as an example.

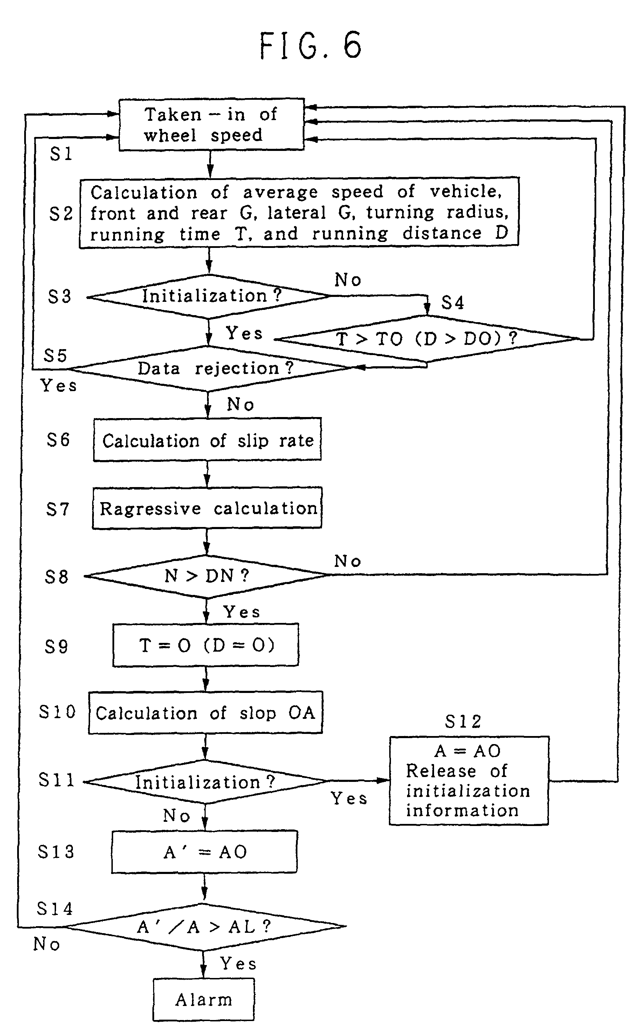

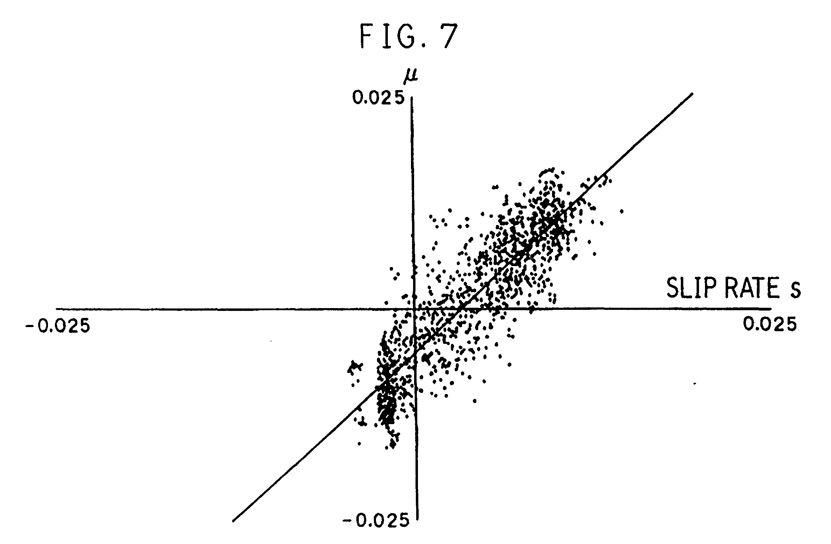

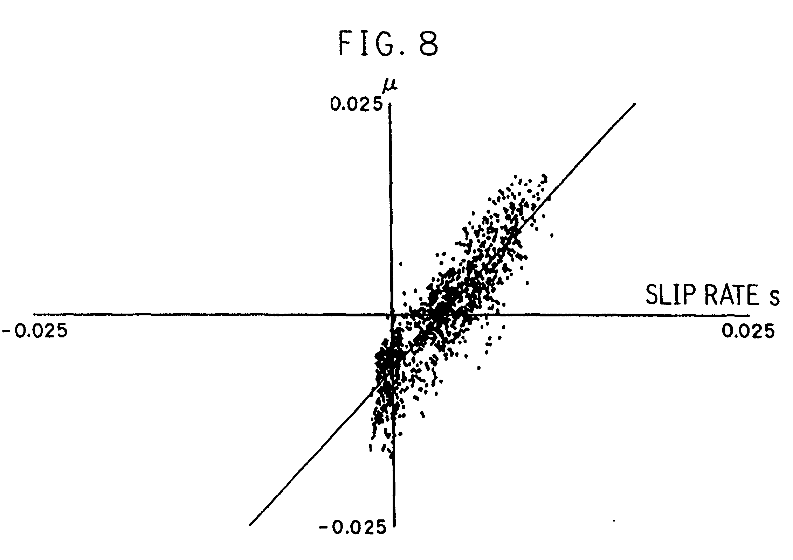

First, as shown in Figure 6, the wheel speed at the time the vehicle is running is taken in by CPU 1b based on wheel speed pulse output by the rotational speed detecting means S, and an average speed of the vehicle, front and rear G, lateral G and turning radius are calculated besides calculation of running time T and running distance D (Step S1, S2). When the initialisation is performed thereafter (Step S3), the system calculates a corresponding value µ of an acceleration/deceleration speed (acceleration G) of the vehicle per second and the slip rate s (front and rear wheel ratio-1) from the wheel speed of the four wheels (Step S6) and performs regressive calculation (Step S7). At this time, it is determined whether the running time T or running distance D is identical with a preliminarily determined running time T0 or running distance d) (Step S4). Data including many errors are eliminated (Step S5). Then, a preliminarily set number of data N are stored (Step S8). This process is repeated until the number of data DN required for the regression has been reached or exceeded whereby an initial µ-s line can be obtained as shown in Figure 7. After setting the running time T and/or running distance D to 0 (Step 9), the system performs linear regression of these data, calculates slope A and holds the same (Step S10 to S12). The slope of this example was A=1.51662. Thereafter, the system regularly repeats the above steps by referring to the running time or integrated travel distance to measure a slope A' (Step S13). In this example, A'=1.82066 as shown in Figure 8 at a wear of approximately 30%, and A'/A=1.20. By comparing this ratio and a threshold AL, it is determined whether an alarm is generated or not (Step S14). However, when the tyre has been exchanged and initialisation has been performed during the measurement of the slope A', the system performs operations to obtain an initial slope A again. Then, by calculating a ratio of A to A', an alarm is generated when a specified threshold has been exceeded and it is thus determined that the tyre is worn.

As explained so far, since the wear condition of a tyre can be known by the present invention, the performance and safety of a vehicle can be improved.

## Claims

1. A wear condition detecting apparatus for a tyre comprising:
(a) a rotational speed detecting means (S) for regularly detecting rotational speeds of tyres of four wheels presently attached to a vehicle,
(b) a calculating means for calculating a ratio of a rotational speed of a front wheel to a rotational speed of a rear wheel based on a measured value obtained by the rotational speed detecting means (S), **characterized in that** it also comprises :
c) a calculating means for obtaining a relational formula between the rotational speed ratio and the acceleration of the vehicle, and
(d) a comparing means for comparing a slope of the relational formula obtained by the calculating means with a preliminarily known slope of a relational formula between a rotational speed ratio of a tyre and the acceleration of the vehicle.

2. A wear condition detecting method for a tyre comprising the steps of:
(a) regularly measuring rotational speeds of tyres of four wheels presently attached to a vehicle,
(b) calculating a ratio of a rotational speed of a front wheel to a rotational speed of a rear wheel based on the measured rotational speed,
**characterized in that** it also comprises the steps of:
(c) obtaining a relational formula between the rotational speed ratio and the acceleration of the vehicle, and
(d) comparing the slope of the relational formula with a preliminarily known slope of a relational formula of a rotational speed ratio of a tyre and the acceleration of the vehicle to determine the wear condition of a tyre.

## Patentansprüche

1. Vorrichtung zur Erfassung des Verschleißzustands eines Reifens, die umfasst:
(a) ein Umdrehungsgeschwindigkeit-Erfassungsmittel (S) zum regelmäßigen Erfassen der Umdrehungsgeschwindigkeiten von gegenwärtig an einem Fahrzeug angebrachten Reifen von vier Rädern;
(b) ein Rechenmittel zum Berechnen eines Verhältnisses der Umdrehungsgeschwindigkeit eines Vorderrads zur Umdrehungsgeschwindigkeit eines Hinterrads anhand eines von dem Umdrehungsgeschwindigkeit-Erfassungsmittel (S) erhaltenen Messwerts, **dadurch gekennzeichnet, dass** sie außerdem umfasst:
(c) ein Rechenmittel zum Erstellen einer Formel für die Beziehung zwischen dem Umdrehungsgeschwindigkeitsverhältnis und der Beschleunigung des Fahrzeugs, und
(d) ein Vergleichsmittel zum Vergleichen der Steigung der von dem Rechenmittel erbrachten Beziehungsformel mit einer im Voraus bekannten Steigung der Formel für die Beziehung zwischen dem Umdrehungsgeschwindigkeitsverhältnis eines Reifens und der Beschleunigung des Fahrzeugs.

2. Verfahren zur Erfassung des Verschleißzustands eines Reifens, das die folgenden Schritte umfasst:
(a) regelmäßiges Messen der Umdrehungsgeschwindigkeiten von gegenwärtig an einem Fahrzeug angebrachten Reifen von vier Rädern,
(b) Berechnen des Verhältnisses der Umdrehungsgeschwindigkeit eines Vorderrads zur Umdrehungsgeschwindigkeit eines Hinterrads anhand der gemessenen Umdrehungsgeschwindigkeit,
**dadurch gekennzeichnet, dass** es außerdem die folgenden Schritte umfasst:
(c) Erstellen einer Formel für die Beziehung zwischen dem Umdrehungsgeschwindigkeitsverhältnis und der Beschleunigung des Fahrzeugs, und
(d) Vergleichen der Steigung der Beziehungsformel mit einer im Voraus bekannten Steigung der Formel für die Beziehung zwischen dem Umdrehungsgeschwindigkeitsverhältnis eines Reifens und der Beschleunigung des Fahrzeugs, um den Verschleißzustand eines Reifens zu bestimmen.

## Revendications

1. Appareil de détection d'un état d'usure de pneumatique, comprenant :
(a) un dispositif (S) de détection de vitesse de rotation destiné à détecter régulièrement les vitesses de rotation des pneumatiques des quatre roues montées à ce moment sur un véhicule, et
(b) un dispositif de calcul du rapport de la vitesse de rotation d'une roue avant et de la vitesse de rotation d'une roue arrière d'après la valeur mesurée obtenue par le dispositif (S) de détection de vitesse de rotation, **caractérisé en ce qu'**il comprend :
(c) un dispositif de calcul destiné à obtenir une formule relationnelle entre le rapport de vitesse de rotation et l'accélération du véhicule, et
(d) un dispositif de comparaison de la pente de la formule relationnelle obtenue par le dispositif de calcul avec la pente connue au préalable d'une formule relationnelle existant entre un rapport de vitesse de rotation d'un pneumatique et l'accélération du véhicule.

2. Procédé de détection d'état d'usure d'un pneumatique, comprenant les étapes suivantes :
(a) la mesure régulière des vitesses de rotation des pneumatiques des quatre roues actuellement montées sur un véhicule, et
(b) le calcul du rapport d'une vitesse de rotation d'une roue avant et d'une vitesse de rotation d'une roue arrière en fonction de la vitesse mesurée de rotation,
**caractérisé en ce qu'**il comprend les étapes suivantes :
(c) l'obtention d'une formule relationnelle entre le rapport de vitesse de rotation et l'accélération du véhicule, et
(d) la comparaison de la pente de la formule relationnelle à une pente connue au préalable d'une formule relationnelle d'un rapport de vitesse de rotation d'un pneumatique et de l'accélération du véhicule pour la détermination de l'état d'usure d'un pneumatique.
